# EUROPÄISCHE PATENTANMELDUNG

(11) **EP 1 479 963 A2**
(43) Veröffentlichungstag der Anmeldung: **24.11.2004**
(21) Anmeldenummer: 04011327.6
(22) Anmeldetag: 13.05.2004
(51) Int. Cl.: F16M 11/26

(54) **Teleskopauszug**

(30) Priorität: 22.05.2003 DE 10323773
(71) Anmelder: Heinrich J. Kesseböhmer KG, 49152 Bad Essen (DE)
(72) Erfinder: Buitmann, Michael, 49838 Gersten (DE)
(74) Vertreter: Busse, Dietrich

(57) **Zusammenfassung**

Ein Teleskopauszug ist mit einem insbesondere rohrförmigen Außenteil (1) und zumindest einem in dieses einschieb- oder aus diesem ausziehbaren Innenteil (2) versehen, wobei diese beiden Teleskopteile (1,2) mittels einer zwischen diesen befindlichen Gleitabstützung (G,G') axial geführt sind. In erfindungsgemäßer Ausführung ist die Gleitabstützung (G,G') mit zumindest einem zwei- oder mehrlagigen Verbundkörper (3,3') oder einem Stützkörper versehen, so daß mit zumindest einer formsteifen Tragschicht (5) und zumindest einer eine elastische Ausgleichsschicht (6) bildenden Struktur eine dauerhafte Zentrierung der Bauteile erreicht ist.

## Beschreibung

Die Erfindung bezieht sich auf einen Teleskopauszug mit einem insbesondere rohrförmigen Außenteil und zumindest einem in diesem axial verschiebbaren Innenteil, gemäß dem Oberbegriff des Anspruchs 1.

Die Erfindung befaßt sich mit dem Problem, einen Teleskopauszug der gemäß einer Lösung in DE 100 20 866 A1 bekannten Art zu schaffen, dessen axial verschiebliche Bauteile mit geringem Aufwand montierbar, in der Führungsstellung zentrierbar und ohne eine Nachstellung des Gleitführungsspieles langzeitig stabil verlagerbar sind.

Die Erfindung löst diese Aufgabe durch einen Teleskopauszug mit den Merkmalen des Anspruchs 1. Hinsichtlich weiterer Ausgestaltungen des Teleskopauszuges wird auf die Ansprüche 2 bis 21 verwiesen.

Der erfindungsgemäße Teleskopauszug ist im Bereich zwischen seinen zumindest zwei axial verlagerbaren Bauteilen mit einem insbesondere als zweilagiger Verbundkörper ausgebildeten Stütz-Halbzeug versehen, bei dem eine formsteife Tragschicht mit einer elastischen Ausgleichsschicht zu einer funktionalen Einheit verbunden sind. Bei der Montage der beiden Teleskopteile mit diesem zwischenliegenden Verbundkörper-Halbzeug ist in einer ersten Montagephase eine optimale radiale Preßverbindung herstellbar, wobei die Teleskopteile durch die elastische Ausgleichsschicht des Verbundkörpers verwendungsgerecht ineinander positioniert sind.

Dabei wird die auf der Tragschicht befindliche elastische Schicht als eine insbesondere Form- und Lageabweichungen der Teleskopteile kompensierende Ausgleichs- und Zentrierlage wirksam. Nach Erreichen dieser ersten Montagephase kann die elastisch vorgespannte Schicht unter Beibehaltung der vorgesehenen Zentrierstellung in ihrem Härtegrad verändert werden.

Der in dieser Verbindungsstellung durch die elastisch-verfestigte Ausgleichsschicht gehaltene Verbundkörper kann in einer nun erfolgenden zweiten Montagephase durch mechanische, thermische, chemische, elektrische und/oder magnetische Beeinflussung so behandelt werden, daß im Bereich der bereits elastisch deformierten Ausgleichsschicht eine zumindest bereichsweise Aushärtung erfolgt. Damit wird die durch den Verbundkörper vorgegebene Abstandsstellung zwischen Außenteil und Innenteil dauerhaft so fixiert, daß bei den anwendungsgemäß vorgesehenen Schubbewegungen eine optimale Führung erreicht ist.

Mit dieser Anwendung des erfindungsgemäßen Verbundkörpers wird in der Vorspannungs-Phase das für die axialen Schubbewegungen des Teleskopauszuges erforderliche Gleitlager-Spiel erzeugt, wobei dieses nahezu eine "Null"- Toleranz aufweisen kann. Damit ist das bisherige aufwendige Nachstellen und Justieren von Gleitlagerungsbauteilen bekannter Teleskopauszüge entbehrlich bzw. wird ein bei Anwendung einer schrumpfenden Zwischenlage (z.B. DE 100 20 866.5) zu ungenau erzeugbares Führungsspiel vermieden.

Entsprechend dem Material der rohrförmigen Außen- bzw. Innenteile ist für die formsteife Trageschicht insbesondere ein optimaler Gleit-Kunststoff vorgesehen, so daß die erfindungsgemäß fixierte und präzise Führungsbereiche aufweisende Gleitlagerung durch geringe Reibung langzeitig verscheißfrei wirksam ist und eine hohe Laufruhe gewährleistet.

In einer weiteren Ausführung ist die Gleitabstützung mit einem einstückig geformten Stützkörper versehen, der auf seiner zur Gleitfläche abgewandten Seite eine mit Formansätzen versehene Anlagestruktur nach Art der Ausgleichsschicht aufweist. In deren Bereich wird der in eine Klemm-Halte-Lage zwischen die Teleskopteile eingespannte Stützkörper durch ein Klebemittel o. dgl. so fixiert, daß die bei der Montagephase erreichte radiale Ausgleichs- und Zentrierlage der Teleskopteile zueinander erhalten bleibt.

Weitere Einzelheiten und vorteilhafte Wirkungen der Erfindung gegeben sich aus der nachfolgenden Beschreibung und der Zeichnung, in der mehrere Teleskopauszüge mit erfindungsgemäßen Verbundkörpern im Bereich der Gleitlagerungen schematisch veranschaulicht sind. In der Zeichnung zeigen:
- Fig. 1: eine schematische Schnittdarstellung eines Teleskopauszuges mit einem Außenteil und einem Innenteil,
- Fig. 2: eine teilweise geschnittene Draufsicht des Teleskopauszuges gemäß einer Linie II-II in Fig. 1,
- Fig. 3: eine perspektivische Gesamtansicht eines montierten Teleskopauszuges mit zylinderförmigen Teleskopteilen,
- Fig. 4: eine Draufsicht des Teleskopauszuges gemäß Fig. 3 mit drei rohrförmigen Teleskopteilen,
- Fig. 5: eine teilweise geschnittene Ausschnittsdarstellung des Teleskopauszuges im Bereich von oberen und unteren Gleitabstützungen,
- Fig. 6: eine Schnittdarstellung etwa gemäß einer Linie VI-VI in Fig. 5 bzw. Linie III-III in Fig. 3,
- Fig. 7: eine vergrößerte Einzeldarstellung eines die Gleitabstützung bildenden Stützkörpers in Form einer Halbschale,
- Fig. 8: eine perspektivische Einzeldarstellung des oberseitig in Fig. 4 am Teleskopauszug vorgesehenen Stützkörpers,
- Fig. 9: eine Schnittdarstellung eines Teleskopauszuges in einer zweiten Ausführungsform mit im wesentlichen rechteckiger Querschnittskontur,
- Fig. 10 bis Fig. 13: jeweilige vergrößerte Einzeldarstellungen der im Teleskopauszug gemäß Fig. 9 verwendeten Stützkörper, und
- Fig. 14: eine teilweise geschnittene Gesamtansicht des Teleskopauszuges in Gebrauchsstellung.

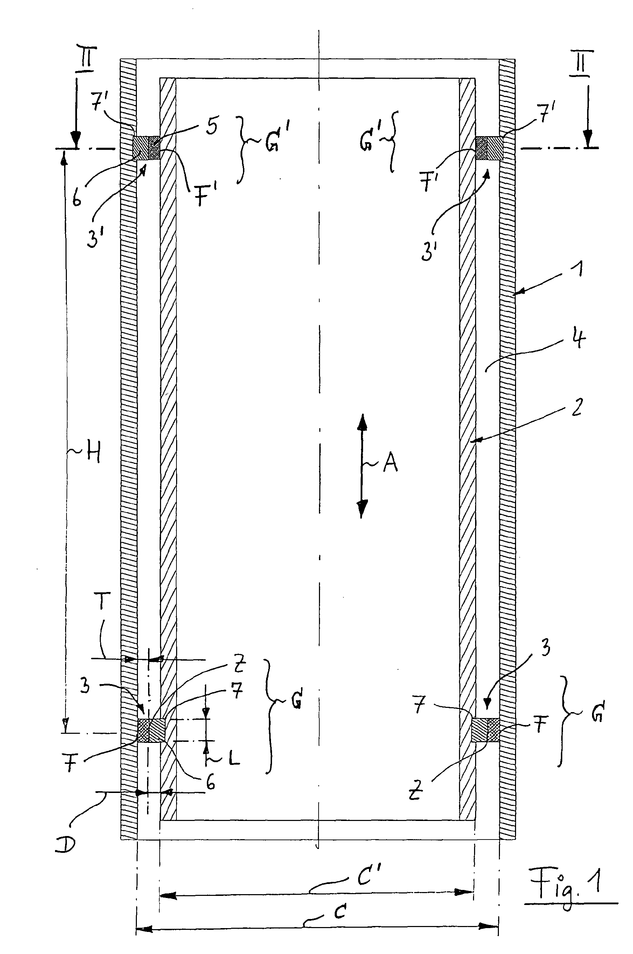

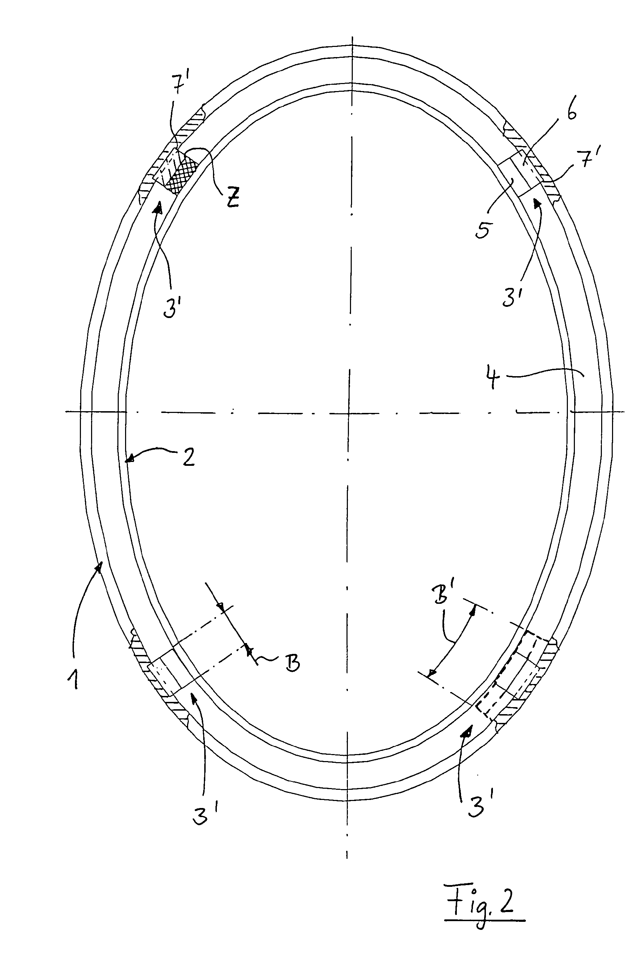

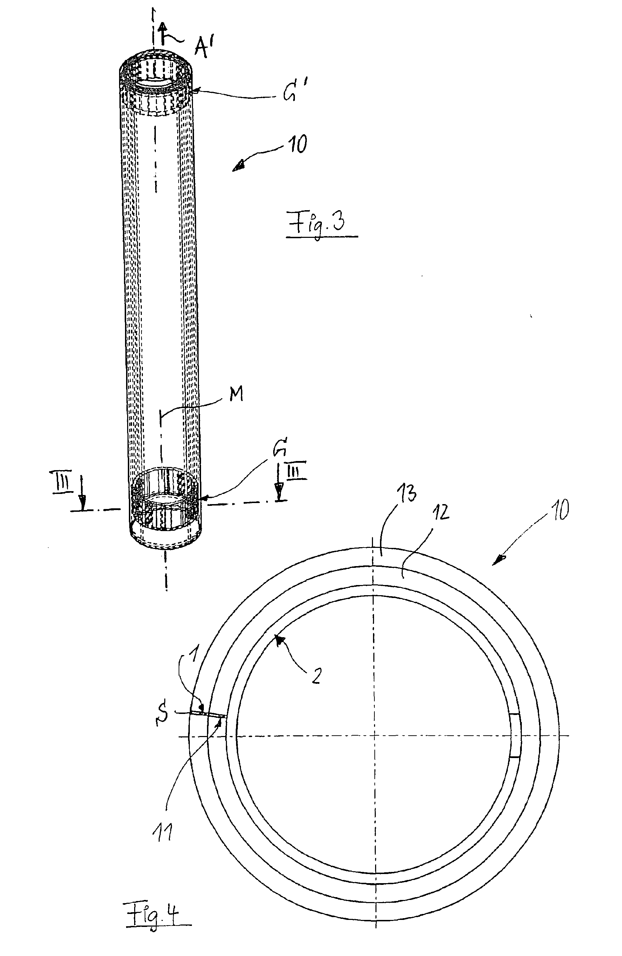

In Fig. 1 ist ein Teleskopauszug mit einem insbesondere rohrförmigen Außenteil 1 und einem relativ zu diesem verlagerbaren bzw. in dieses einschieb- oder aus diesem ausziehbarem Innteil 2 (Bewegungspfeil A) dargestellt. Dabei sind diese beiden Teleskopteile 1 und 2 durch allgemein mit G, G' bezeichnete Gleitabstützungen so miteinander verbunden, daß die in Pfeilrichtung A erfolgende Bewegung axial geführt ist. Ebenso ist denkbar, daß der Teleskopauszug mit mehr als dem einen Innenteil 2 versehen ist (nicht dargestellt) und in diesem entsprechende Gleitabstützungen vorgesehen sind.

Für die erfindungsgemäße Ausführung der Gleitabstützungen G, G' ist diese mit zumindest einem Verbundkörper 3 versehen, der in den Zwischenraum 4 zwischen die Teleskopteile 1 und 2 einbringbar ist. Dabei besteht der Verbundkörper 3 aus zumindest einer formsteifen Tragschicht 5 und einer elastischen Ausgleichsschicht 6, mit der die funktionale Wirkung des Verbundkörpers 3 bereits nach einer nicht näher dargestellten Montagephase erreicht wird. Die Ausgleichsschicht 6 ist dazu aus einem elastischen und deformierbaren (Kunststoff-) Material hergestellt, das während des Einbaus des Verbundkörpers 3 in den Zwischenraum 4 als ein komprimierbarer Bereich nutzbar ist, um die Teile 1, 2 ohne zusätzlichen Meßaufwand oder aufwendige Hilfswerkzeuge einfach und schnell miteinander zu verbinden.

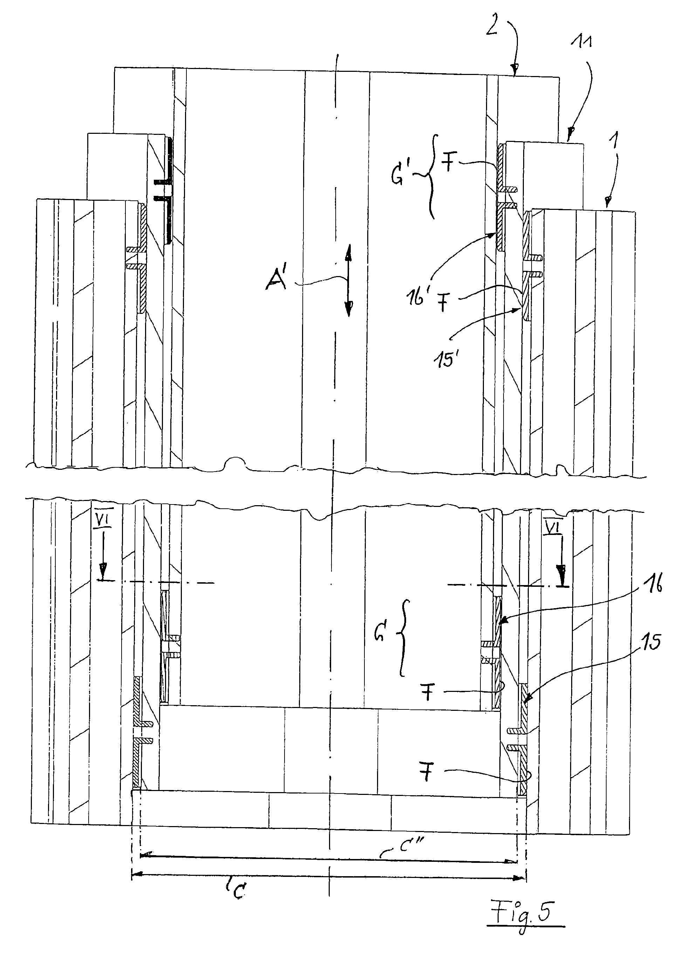

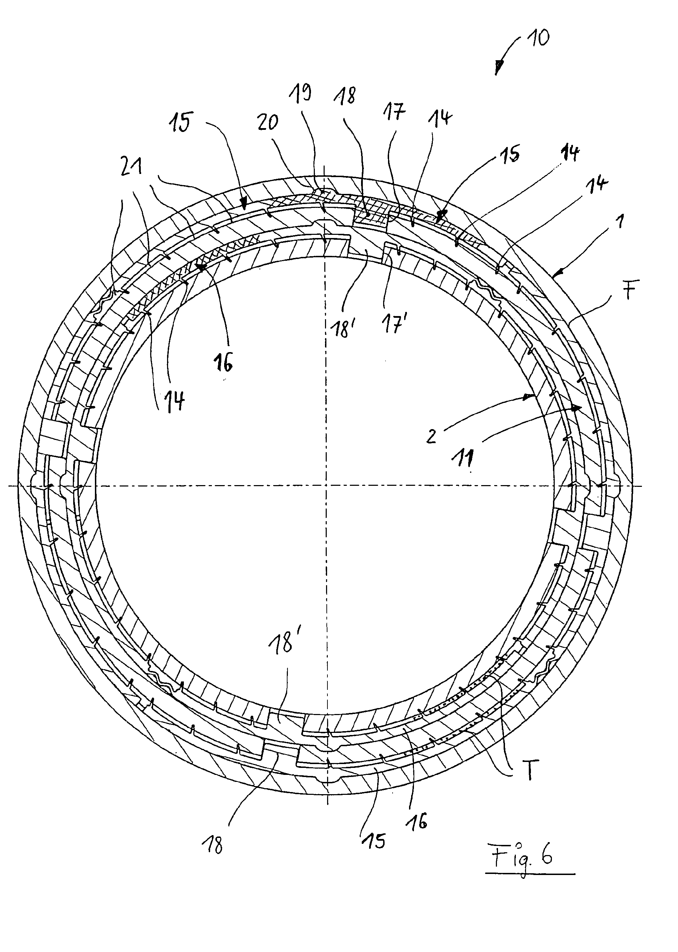

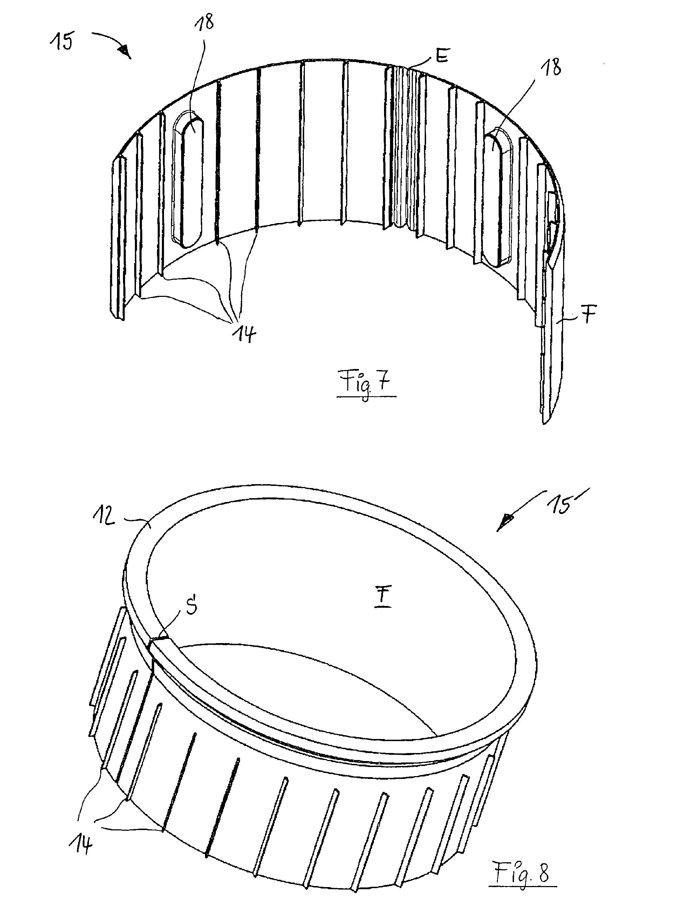

Nach Erreichen der in Fig. 1 bzw. 2 dargestellten Montagestellung kann die elastisch vorgespannte bzw. einen elastisch-verfestigten Zustand ausweisende Ausgleichsschicht 6 zur Halterung des Verbundkörpers 3 bzw. der Teile 1, 2 fixiert sein. In vorteilhafter Ausführung ist die Ausgleichsschicht 6 aus einem Material gebildet, das mit geringem Auswand aushärtbar ist. Diese Aushärtung kann zeitverzögert nach der ersten Spann-Montagephase erfolgen, so daß an dem Teleskopauszug bzw. dem Außen- oder Innenteil 1, 2 weitere Baugruppen (nicht dargestellt) montierbar sind und erst danach die Aushärtung im Bereich des Verbundkörpers 3 vorgesehen ist.

Denkbar ist dabei, daß das elastische Material auf die Preßbedingengen im Zwischenraum 4 so abgestimmt ist, daß bereits die dabei wirkenden mechanischen Druckkräfte nach einer Einwirkungszeit zu der Aushärtung der Ausgleichsschicht 6 führen.

Mit dem in Montagestellung zwischen die Teleskopteile 1 und 2 verbrachten Verbundkörper 3 wird eine Zentrierung der Teleskopteile 1 und 2 in ihrer vorgesehenen Gebrauchsstellung erreicht. Dabei kann sich die elastische Ausgleichsschicht 6 auch rückformend ausweiten, wobei bereits durch bereichsweises Aushärten der die Spann-bzw. Preßstellung des Verbundkörpers 3 vorgebenden Ausgleichsschicht 6 eine Fixierung der Teleskopteile 1, 2 in radialer Richtung bewirkt ist und dabei die axiale Beweglichkeit (Pfeil A) der Teile 1 und 2 erhalten bleibt.

Der erfindungsgemäße Verbundkörper 3 wird als ein vorgefertigtes Montage-Halbzeug bereitgestellt, das in seiner konstruktiven Ausführung weitgehend beliebig an die Gestaltung der jeweiligen Teleskopteile 1, 2 anpaßbar ist. Denkbar ist dabei, daß anstelle der in Fg. 2 dargestellten elliptischen Querschnittsform der Teleskopteile 1, 2 auch kreisförmige, ovale, drei-, vier-, oder vieleckige Querschnitte mit dem entsprechenden Verbundkörper 3 montiert werden. Der als Einzelteil gefertigte Verbundkörper 3 weist dabei eine Länge L und eine Breite B auf, wobei ebenso denkbar ist, den Verbundkörper 3 als ringförmig geschlossenes Hülsenteil oder als einen an die radiale Kontur der Bauteile anpaßbaren Segmentbogen (Bogenmaß B; Fig. 2, rechte Seite, Strichdarstellung) herzustellen.

Das in Fig. 1 mit D bezeichnete Dickenmaß der elastischen Ausgleichsschicht 6 ist so bemessen, daß Maß- und Formtoleranzen, beispielsweise betreffend den Innendurchmesser C des Außenteils 1 bzw. den Außendurchmesser C' des Innenteils 2 so ausgleichbar sind, daß diese Maßtoleranzen durch die Gleitverbindung G tolerierbar sind und ein zusätzliches Nachstellen und Feinpositionieren der Teile 1 und 2 zueinander nach dem Einbau und Aushärten der Verbundkörper 3 entbehrlich ist.

In vorteilhafterer Ausführung ist der Verbundkörper 3 im Bereich der Tragschicht 5 und der Ausgleichsschicht 6 aus jeweils einer Kunststoff-Lage geformt. Dabei versteht es sich, daß die eine weitgehend variable Dicke T aufweisende Tragschicht 5 aus einem geringere Reibung, geringen Verschleiß und hohe Laufruhe gewährleistenden Kunststoff besteht, der mit seinen Führungseigenschaften bereits für einstellbare Gleitlager bekannte Ausführung Verwendung findet. Die als zweite Komponente auf der Tragschicht 5 aufzubringende Ausgleichsschicht 6 kann dabei aus einem elastischen Grundmaterial mit Zusatzstoffen bestehen, mit denen die vorbeschriebene Aushärtung der Ausgleichsschicht 6 beeinflußbar ist. Für diese Aushärtung nach der Montage ist eine mechanische, thermische, chemische, elektrische und/oder magnetische Beeinflussungen der Ausgleichsschicht 6 denkbar.

In einer weiteren Ausführung ist denkbar, daß der Verbundkörper 3 im Bereich der Tragschicht 5 teilweise oder vollständig aus einem metallischen oder nichtmetallischen Werkstoff besteht, der mit der Ausgleichsschicht 6 versehen wird. Ebenso ist denkbar, daß die Ausgleichsschicht 6 als ein Federteil (nicht dargestellt) vorgesehen ist, das als elastischer Zusatz mit der als Tragteil wirksamen Tragschicht 5 verbunden wird und diese Einzelteile als Einheit montiert werden.

Außerdem kann der Verbundkörper 3 mehr als die beiden Schichten 5 und 6 aufweisen (nicht dargestellt), wobei die Ausgleichsschicht 6 zwischen zwei der Tragschichten angeordnet sein kann, zwei Teilbereiche des elastischen Materials auf Lücke nebeneinander auf die Tragschicht 5 aufgebracht sind oder diese beidseitig mit einer Ausgleichsschicht versehen ist. In zweckmäßiger Ausführung sind die weitgehend beliebig geformten Verbundkörper 3 (Abmessungen B, L) aus stoffschlüssig verbundenen Lagen 5 und 6 aufgebaut, wobei ebenso denkbar ist, die Ausgleichsschicht 6 durch ein form- oder kraftschlüssiges Verbundprofil im Bereich einer Verbindungszone Z an der Tragschicht 5 hinreichend fest zu fixieren.

In der Darstellung gemäß Fig. 1 sind die in einem Abstand H zu den unteren Gleitabstützungen G angeordneten Gleitabstützungen G' mit unterschiedlichen Verbundkörpern 3 bzw. 3' versehen. Bedingt durch die vorgesehene Gleitverlagerung A sind die Verbundkörper 3 am Innenteil 2, nämlich bei G, und die Verbundkörper 3' am Außenteil 1, nämlich im Bereich der Gleitabstützung G', ortsfest gehalten, so daß eine wechselseitige Abstützung erreicht ist. Ebenso ist denkbar, mehrere der entsprechenden Verbundkörper 3 bzw. 3' in axialer Richtung an dem jeweiligen Teleskopteil 1 bzw. 2 vorzusehen (nicht dargestellt).

In der dargestellten Ausführung ist jeweils der Verbundkörper 3 mit seiner Ausgleichsschicht 6 formschlüssig am Innenteil 2 (bei G) und der Verbundkörper 3' mit seiner Ausgleichsschicht 6 formschlüssig am Außenteil 1 (bei G') festgelegt. Der jeweils freie Anlagebereich mit der Tragschicht 5 definiert damit eine jeweilige Gleitfläche F, F' der Gleitabstützungen G, G'.

Ebenso ist denkbar, daß zur Festlegung der Verbundkörper 3, 3' die (dann nicht durch Gleitreibung belastete) Tragschicht 5 vorgesehen wird. Danach bildet die Ausgleichsschicht 6 nach ihrer Aushärtung an ihrem freien Anlagebereich eine neue Gleitfläche (nicht dargestellt), so daß mit deren Führungseigenschaften die Bauteilfunktion bestimmt ist.

In der dargestellten Ausführung gemäß Fig. 1 und 2 ist die Tragschicht 5 durch eine jeweilige Formausnehmung 7; 7', beispielsweise eine Ringnut, mit dem jeweiligen Teleskopteil 1, 2 formschlüssig verbunden. Ebenso ist denkbar, die Abstützung des Verbundkörpers 3, 3' an dem jeweiligen Teleskopteil 1, 2 durch eine stoffschlüssige Fixierung, beispielsweise mittels einer Löt- oder Klebeverbindung, zu erreichen.

Die jeweils die Gleitfläche F, F' bildende Anlagezone des Verbundkörpers 3, 3' ist in zweckmäßiger Ausführung entsprechend dem Material der Teleskopteile 1, 2 optimiert, wobei beispielsweise eine Anpassung der Gleitfläche F, F' an metallische oder nichtmetallische Oberflächen, vorzugsweise an Aluminium, vorgesehen sein kann. Ebenso sind Gleitverbindungen im Bereich einer Farbschicht, einer Pulverbeschichtung o. dgl. Oberflächenabdeckungen möglich. Die vorbeschriebene Konstruktion mit den optimale Reib- und Verschleißwerte aufweisenden Verbundkörpern 3, 3' kann beispielsweise für teleskopierbare Stützträger zum Einsatz kommen, die an höhenverstellbaren Tischen, Stühlen oder dgl. vorgesehen sind.

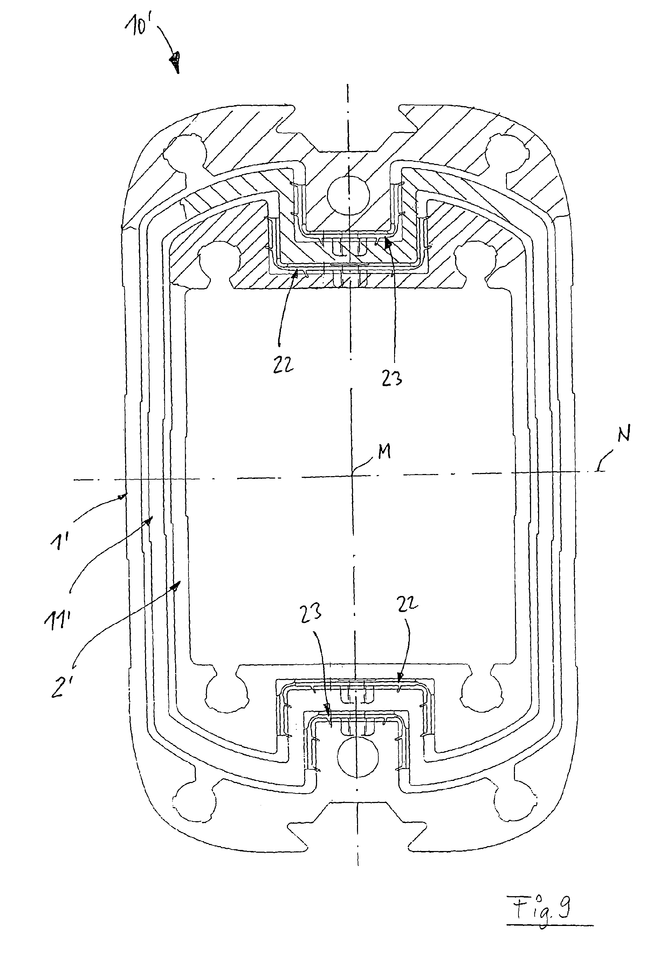

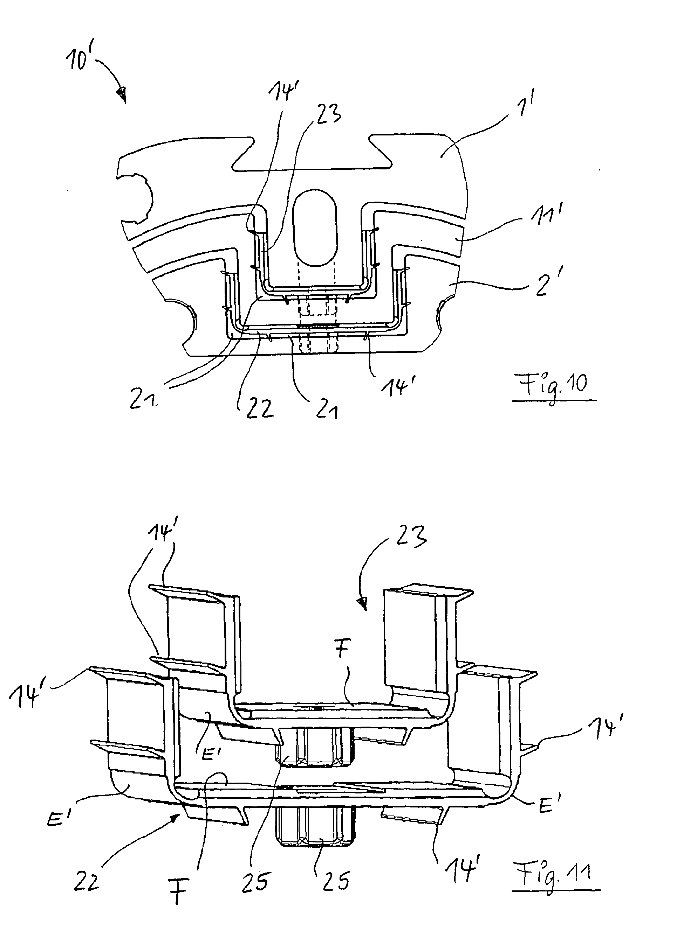

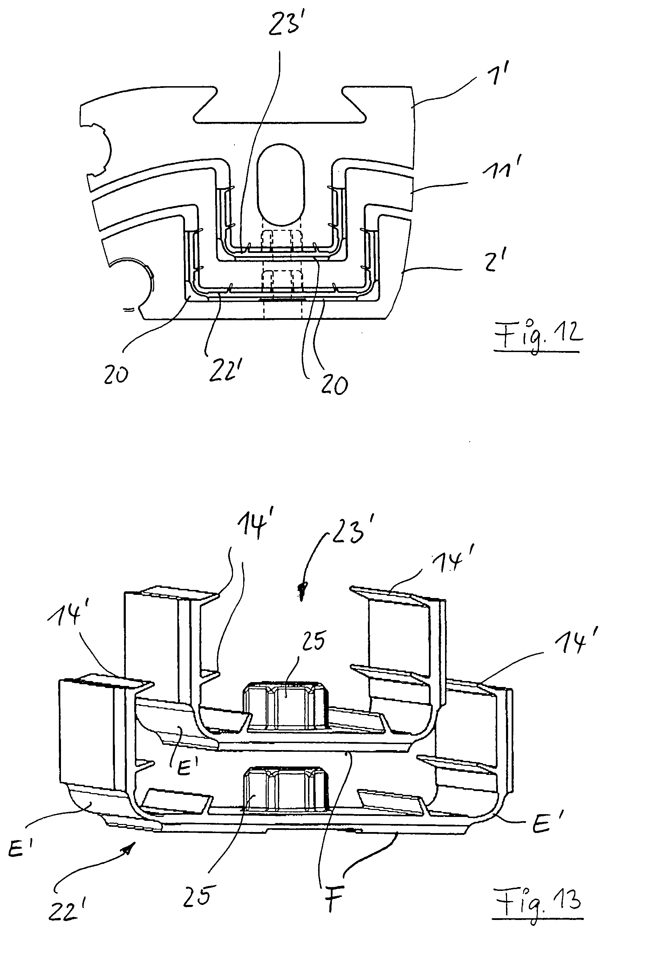

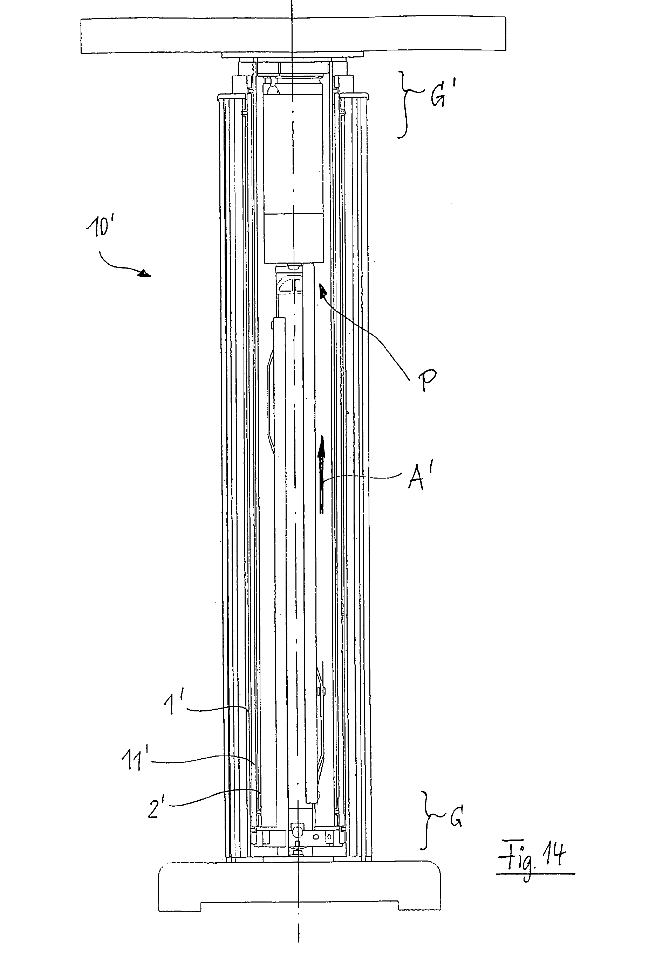

In Fig. 3 ist ein aus zylindrischen Rohr-Teilen gebildeter Teleskopauszug 10 dargestellt, der beispielsweise für lageveränderbare Küchenmöbelteile o. dgl. vorgesehen ist. Der Teleskopauszug 10 weist in Richtung seiner Mittellängsachse M beabstandet eine untere und eine obere Gleitabstützung G, G' auf, mittels der das Innenteil 2, ein Mittelteil 11 und das Außenteil 1 axial beweglich zueinander abgestützt sind (Fig. 5, Pfeil A). Die Draufsicht gemäß Fig. 4 zeigt, daß der Teleskopauszug 10 oberseitig mit jeweiligen Deckkappen 12, 13 verschlossen ist und in deren Schlitzbereich S die darunterliegenden Teile 1 und 11 sichtbar sind.

Zur Bildung der Gleitabstützungen G, G' sind bei dem Teleskopauszug 10 jeweilige einerseits die Gleitfläche F, F' bildende und andererseits am jeweils zugeordneten Teleskopteil 11, 2 anlegbare Formansätze 14 aufweisende Stützkörper 15, 16 bzw. 15', 16' vorgesehen (zur besseren Veranschaulichung durch eine teilweise Kreuz-Schraffur hervorgehoben). Bei diesen Stützkörpern bilden die Formansätze 14 eine elastische Anlagestruktur nach Art einer elastischen Ausgleichsschicht (Fig. 1, Fig. 2), wobei diese Elastizität der Formansätze 14 durch jeweilige zum zugeordneten Teil hin sichtbare "Eingriffs-Spitzen" in der zeichnerischen Darstellung verdeutlicht wird (Fig. 6). Es versteht sich, daß diese Formansatz-Spitzen bei der Montage der Teleskopteile eine weitgehend variable Deformation erfahren können und damit der vorgesehene Lageausgleich der Teile zueinander erreicht wird.

In Fig. 6 ist in einer Schnittdarstellung die Ausbildung der unteren Gleitabstützung G sichtbar, wobei im rechten oberen Darstellungsbereich ausgehend vom Außenteil 1 ein diesem als Innenteil zugeordneter Mittel-Zylinder 11 den Stützkörper 15 trägt. In der dargestellten Ausführungsform sind diese Stützkörper 15, 16, 15', 16' jeweils als ein Halbschalen-Teil (Fig. 7) geformt, an dem innenseitig die jeweiligen axial verlaufenden Formansätze 14 vorgesehen sind. In der Einbaulage gemäß Fig. 6 liegen diese Formansätze 14 am Mittelteil 11 so an, daß durch die elastische Abstützung der Formansätze 14 die vorbeschriebene Zentrierung des Außenteils 1 zum Mittelteil 11 erreicht wird. Zur axialen Halterung bei Schubbelastung in Pfeilrichtung A' des Stützkörpers 15 am Mittelteil 11 ist in diesen eine als Langloch ausgeführte Haltenut 17 eingebracht, in die ein entsprechender Halteansatz 18 des Stützkörpers 15 einführbar ist und damit die Verbindung der Teile formschlüssig gesichert wird. Am Außenumfang weist der Stützkörper 15 zumindest einen Führungsansatz 19 auf, der axial gleitbeweglich in eine Längsnut 20 des Außenteils 1 eingreift. Der Halteansatz 18 und der Führungsansatz 19 bilden gemeinsam eine Verdrehsicherung für den Stützkörper 15, so daß dieser in radialer Richtung verdrehsicher in seiner Einbaulage fixiert ist.

In zweckmäßiger Ausführung ist der Stützkörper 15 in Umfangsrichtung mit einer Vielzahl von Formansätzen 14 und zumindest zwei Halteansätzen 18 versehen (Fig. 6, Fig. 7). Im Bereich zwischen diesen beiden Halteansätzen 18 weist der Stützkörper 15 einen nach Art eines Filmscharniers wirksamen Verbindungssteg E auf, mit dem die Montage des Stützkörpers 15 vereinfacht ist und radiale Verschiebungen der Wandung des Stützkörpers bei dessen Montage ausgleichbar sind.

Zur Komplettierung der Gleitabstützung G sind in der dargestellten Ausführungsform gemäß Fig. 6 zwei gleichgeformte Stützkörper 15 über den Umfang des Teleskopauszuges 10 verteilt. Denkbar ist auch, daß der Stützkörper 15 einteilig ausgeführt ist, wie dies beispielsweise der obere Stützkörper 15' gemäß Fig. 8 verdeutlicht.

Der Stützkörper 15 befindet sich in der eine erste Montagephase zeigenden Darstellung gemäß Fig. 6 in seiner nach Art einer Ausgleichsschicht wirksamen Zentrierstellung zwischen den Teleskopteilen 1 und 11 bzw. 11 und 2, wobei in einem anschließenden Montageschritt eine Aushärtung im Bereich der Formansätze 14 vorgesehen ist, so daß die für die Gleitabstützung der axial beweglichen Teile vorgesehene, optimale und langzeitstabile Montagestellung dauerhaft fixiert wird. In zweckmäßiger Ausführung wird in den Bereich der Formansätze 14 und die hier gebildeten Aufnahmeräume 21 zumindest bereichsweise ein (mit einer punktierten Zone bei T dargestelltes) Füllmaterial eingebracht. Mit diesem werden die Formansätze 14 so fixiert, daß der Stützkörper 15 radiale Druckbelastungen weitgehend deformationsfrei aufnehmen kann. Dabei kann für diese Fixierung der Stützkörper 15, 15', 16, 16' beispielsweise ein als aushärtender Klebstoff ausgebildetes Füllmaterial vorgesehen sein.

In Fig. 9 ist der Teleskopauszug 10' in einer zweiten Ausführung dargestellt, wobei dieser eine im wesentlichen rechteckige Querschnittskontur im Bereich der Bauteile 1', 11' und 2' aufweist. Bei dieser Konstruktion sind jeweilige an den Querseiten gegenüberliegende und im wesentlichen spiegelbildlich zur Querebene N verlaufende Stützkörper 22, 23 vorgesehen, die im Querschnitt ein im wesentlichen U-förmiges Profil (Fig. 11, Fig. 13) mit Filmscharnier-Teilen E' aufweisen und dabei auf der jeweils der Gleitfläche F, F' gegenüberliegenden Seite die vorbeschriebenen Formansätze 14' aufweisen.

In Fig. 10 und Fig. 11 sind die im Bereich der oberen Gleitabstützung G' vorgesehenen Stützkörper 22 dargestellt und die Darstellungen gemäß Fig. 12 und 13 zeigen die Ausbildung der Bauteile 23 im Bereich der unteren Gleitabstützung G. Die an den Stützkörpern 22, 23 vorgesehenen Formansätze 14' sind wirkungsgleich mit den bereits beschriebenen Formansätzen 14 gemäß Fig. 6. Zur Fixierung der Stützkörper 22, 23 an den paarweise gleichen Stützbereiche bildenden Teilen 1' und 11' bzw. 11' und 2' sind jeweilige Halteansätze 25 in Form von Mehrkantprofilen vorgesehen, die in jeweilige konforme Formausnehmungen der Teile 1', 2' und 11' so einführbar sind, daß bei der vorgesehenen Axialverschiebung der Teleskopteile zueinander eine gleitsichere Abstützung gebildet ist. In Fig. 14 ist in einer Gesamtansicht eine dem Teleskopauszug 10' entsprechende Baueinheit dargestellt, die durch einen segmentförmigen Teilschnitt bis in das innere Teil 2' so weit geöffnet ist, daß auch eine innenliegende Antriebsbaugruppe P sichtbar wird.

## Patentansprüche

1. Teleskopauszug mit einem insbesondere rohrförmigen Außenteil (1) und zumindest einem in dieses einschieb- oder aus diesem ausziehbaren Innenteil (2), wobei diese beiden Teleskopteile (1, 2) mittels einer zwischen diesen befindlichen Gleitabstützung (G; G') axial geführt sind, **dadurch gekennzeichnet, daß** die Gleitabstützung (G; G') mit zumindest einem zwei- oder mehrlagigen Verbundkörper (3; 3') versehen ist, der aus zumindest einer formsteifen Tragschicht (5) und zumindest einer elastischen Ausgleichsschicht (6) gebildet ist.

2. Teleskopauszug nach Anspruch 1, **dadurch gekennzeichnet, daß** bei der Montage des Verbundkörpers (3; 3') dessen Ausgleichssschicht (6) aus einem elastischen Montagezustand in einen elastisch deformierten Gebrauchszustand verbringbar ist.

3. Teleskopauszug nach Anspruch 1 oder 2, **dadurch gekennzeichnet, daß** der Verbundkörper (3; 3') in seiner Montagestellung zwischen die Teleskopteile (1, 2) einspannbar und dabei eine deren Zentrierung bewirkende Spannstellung mit der elastisch-verfestigten Ausgleichschicht (6) gebildet ist.

4. Teleskopauszug nach einem der Ansprüche 1 bis 3, **dadurch gekennzeichnet, daß** die Ausgleichsschicht (6) in ihrer Spannstellung zumindest bereichsweise aushärtbar ist.

5. Teleskopauszug nach einem der Ansprüche 1 bis 4, **dadurch gekennzeichnet, daß** die Ausgleichsschicht (6) aus ihrem elastischen Montagezustand zeitverzögert in einen vollständig ausgehärteten Gebrauchszustand verbringbar ist.

6. Teleskopauszug nach einem der Ansprüche 1 bis 5, **dadurch gekennzeichnet, daß** der Verbundkörper (3; 3') im Bereich der zumindest zwei Schichten (5, 6) aus einem jeweiligen Kunststoff-Material gebildet ist.

7. Teleskopauszug nach einem der Ansprüche 1 bis 5, **dadurch gekennzeichnet, daß** der Verbundkörper (3; 3') im Bereich der Tragschicht (5) teilweise oder vollständig aus einem metallischen oder nichtmetallischen Werkstoff besteht.

8. Teleskopauszug nach einem der Ansprüche 1 bis 7, **dadurch gekennzeichnet, daß** der mit weitgehend beliebiger Kontur geformte Verbundkörper (3; 3') stoffschlüssig und/oder formschlüssig verbundene Schichten (5, 6) aufweist.

9. Teleskopauszug nach einem der Ansprüche 1 bis 8, **dadurch gekennzeichnet, daß** der Verbundkörper (3; 4) mit seiner Tragschicht (5) oder seiner Ausgleichsschicht (6) form- oder kraftschlüssig am Außenteil (1) oder Innenteil (2) festlegbar ist, derart, daß der jeweils freie Anlagenbereich die Gleitfläche (F; F') der Gleitabstützung (G, G') definiert.

10. Teleskopauszug nach einem der Ansprüche 1 bis 9, **dadurch gekennzeichnet, daß** eine der beiden Schichten (5, 6) des Verbundkörpers (3; 3') durch eine Klebeverbindung, Lötverbindung o. dgl. stoffschlüssig an einem der beiden Teleskopteile (1, 2) fixiert ist.

11. Teleskopauszug nach einem der Ansprüche 1 bis 10, **dadurch gekennzeichnet, daß** der Verbundkörper (3; 3') unter Vorspannung zwischen die beiden Rohrteile (1, 2) einbringbar ist und danach der Verbundkörper (3; 3') durch die expandierende Ausgleichsschicht (6) die Spannstellung einnimmt.

12. Teleskopauszug nach einem der Ansprüche 1 bis 11, **dadurch gekennzeichnet, daß** die jeweils die Gleitfläche (F; F') bildende Anlagezone des Verbundkörpers (3, 3') optimale Führungs- und Gleiteigenschaften mit einer Oberfläche aus Metall, Nichtmetall, Kunststoff, Beschichtungsmitteln o. dgl. aufweist.

13. Teleskopauszug nach einem der Ansprüche 1 bis 12, **dadurch gekennzeichnet, daß** die rohrförmigen Teleskopteile (1, 2) in axialer Richtung (A) mehrere im Abstand angeordnete Verbundkörper (3, 3') als Gleitabstützung (G, G') aufweisen und die Verbundkörper (3, 3') wechselseitig am Außenteil (1) bzw. Innenteil (2) ortsfest gehalten sind.

14. Teleskopauszug nach einem der Ansprüche 1 bis 13, **dadurch gekennzeichnet, daß** die elastische Ausgleichsschicht (6) in ihrer Dicke (D) so bemessen ist, daß Maßtoleranzen im Bereich der Gleitverbindung (G, G') ausgleichbar sind.

15. Teleskopauszug nach einem der Ansprüche 1 bis 14, **dadurch gekennzeichnet, daß** der Verbundkörper (3; 3') in seiner Querschnitts- und Längskontur an jeweilige Teleskopteile (1, 2) mit kreisförmigem, ovalem, elliptischem, drei-, vier- oder vieleckigem Querschnitte anpaßbar ist.

16. Teleskopauszug mit einem insbesondere rohrförmigen Außenteil (1, 1') und zumindest einem in dieses einschieb- oder aus diesem ausziehbaren Innenteil (2, 11; 2', 11'), wobei diese Teleskopteile (1, 1', 2, 2', 11, 11') mittels einer zwischen diesen befindlichen Gleitabstützung (G, G') axial geführt sind, **dadurch gekennzeichnet, daß** die Gleitabstützung (G, G') mit zumindest einem einerseits die Gleitfläche (F, F') bildenden einstückigen Stützkörper (15, 16, 15', 16', 22, 23, 22', 23') versehen ist, der andererseits jeweilige in Montagestellung am zugeordneten Teleskopteil anlegbare Formansätze (14, 14') als elastische Anlagestruktur aufweist.

17. Teleskopauszug nach Anspruch 16, **dadurch gekennzeichnet, daß** die Formansätze (14, 14') bei Montage des Stützkörpers (15, 16, 15', 16', 22, 23, 22', 23') in einer elastisch deformierten Gebrauchsstellung nach Art einer Ausgleichsschicht die Zentrierung der Teleskopteile (1, 11, 2, 11; 1', 11', 2', 11') zueinander bewirken.

18. Teleskopauszug nach Anspruch 16 oder 17, **dadurch gekennzeichnet, daß** der eine formsteife Tragschicht bildende Stützkörper (15, 16, 15', 16', 22, 23, 22', 23') im Bereich der Formansätze (14, 14') aussteifbar ist.

19. Teleskopauszug nach einem der Ansprüche 16 bis 18, **dadurch gekennzeichnet, daß** der montierte Stützkörper (15, 16, 15', 16', 22, 23, 22', 23') im Bereich der Formansätze (14, 14') zwischen den Teleskopteilen (1, 11, 2; 1', 11', 2') jeweilige Aufnahmeräume (21) bildet und in diese zumindest bereichsweise ein Füllmaterial (T) einbringbar ist.

20. Teleskopauszug nach einem der Ansprüche 16 bis 19, **dadurch gekennzeichnet, daß** der Stützkörper (15, 16, 15', 16', 22, 23, 22', 23') mittels eines als aushärtender Klebestoff ausgebildeten Füllmaterials (T) in der Gebrauchsstellung fixiert ist.

21. Teleskopauszug nach einem der Ansprüche 16 bis 20, **dadurch gekennzeichnet, daß** der Stützkörper als eine eine Halbschale, ein U-Profil o. dgl. Teil bildende und an den Querschnitt des Teleskopauszuges (10, 10') angepaßte Kontur aufweist, an der die jeweiligen axial verlaufenden Formansätze (14, 14') einstückig geformt sind.
